# EUROPÄISCHE PATENTSCHRIFT

(11) **EP 0 799 370 B1**
(45) Veröffentlichungstag und Bekanntmachung des Hinweises auf die Patenterteilung: **17.06.1998**
(21) Anmeldenummer: 95942690.9
(22) Anmeldetag: 18.12.1995
(51) Int. Cl.: F02B 37/18

(54) **ABGASTURBOLADER**
EXHAUST GAS TURBO-SUPERCHARGER
TURBOCOMPRESSEUR A GAZ D'ECHAPPEMENT

(30) Priorität: 20.12.1994 DE 4445489
(43) Veröffentlichungstag der Anmeldung: 08.10.1997
(73) Patentinhaber: AUDI AG, 85045 Ingolstadt (DE)
(72) Erfinder: LE MAIRE, Denis, D-85049 Ingolstadt (DE)
(86) Internationale Anmeldenummer: EP9505010
(87) Internationale Veröffentlichungsnummer: WO9619648

(56) Entgegenhaltungen:
- EP-A- 0 078 637
- CH-A- 221 396
- DE-B- 1 264 157
- DE-U- 8 805 288
- FR-A- 2 649 756
- US-A- 3 355 878

## Beschreibung

Die Erfindung betrifft einen Abgasturbolader für Brennkraftmaschinen, insbesondere in Kraftfahrzeugen, gemäß dem Oberbegriff des Patentanspruches 1.

Zum schnellen Aufbau des Ladedruckes schon im unteren Teillastbereich von Brennkraftmaschinen werden vermehrt Abgasturbolader eingesetzt, deren Schluckvermögen schon in höheren Teillastbereichen endet; bei Vollast und hohen Drehzahlen wird dann ein nicht unerheblicher Teil des Abgases über einen Bypass an der Turbine vorbeigeführt. Es versteht sich, daß dabei zur strömungsdynamisch günstigen Abführung des Abgases das Turbinengehäuse bzw. die Strömungsführungen darin entsprechend zu gestalten sind. Jedoch stehen diesen Bemühungen insbesondere bei Brennkraftmaschinen in Kraftfahrzeugen aufgrund der vielen Einbauten im Motorraum oft erhebliche bauliche Zwänge entgegen.

Durch die EP-A2-0 334 228 ist eine Bi-Turboladeranordnung mit zwei Abgasturboladern bekannt, wobei die beiden Abgasturbinen seitenverkehrt aneinander angebaut sind. Das aus den Turbinen austretende Abgas wird dabei durch einen gekrümmten Verlauf der Abströmkanäle in radiale Richtung umgelenkt, um Turbulenzen der beiden gegeneinander gerichteten Abgasströme zu vermeiden. Zur Abführung überschüssiger Abgasmengen ist außerhalb der beiden Abgasturbinen ein Bypass vorgesehen.

Aufgabe der Erfindung ist es, einen Abgasturbolader der gattungsgemäßen Art vorzuschlagen, der eine weiter verbesserte Abgasabführung bei günstigen Einbau-Abmessungen und ein geringes Gewicht aufweist.

Diese Aufgabe wird erfindungsgemäß mit den kennzeichnenden Merkmalen des Patentanspruches 1 gelöst. Vorteilhafte Weiterbildungen der Erfindung geben die weiteren Patentansprüche an.

Erfindungsgemäß wird vorgeschlagen, den in das Turbinengehäuse integrierten Bypasskanal ebenfalls mit radialer Ausrichtung in den an den Abströmkanal anschließenden Abströmflansch ausmünden zu lassen.

Der integrierte Bypasskanal ergibt in Verbindung mit der radialen Ausrichtung des abströmenden Abgases aus der Turbine und zusätzlich aus dem Bypasskanal einen turbinenseitig erheblich kürzer bauenden und in der Anpassungsfähigkeit weitaus flexibleren Abgasturbolader, der insgesamt gesehen aufgrund der möglichen günstigeren Abgasleitungsführung in Leistung und Wirkungsgrad verbessert ist.

Abhängig von den Einbauverhältnissen kann dabei der Bypasskanal im wesentlichen geradlinig bzw. zumindest über einen Teilabschnitt tangential zum Turbinenrad verlaufen, wobei insbesondere in Verbindung mit einer strömungsgünstigen Trennwand im Turbineneinlauf eine nur geringen Gegendruck erzeugende Abgasabführung, insbesondere im Vollastbereich der Brennkraftmaschine, erzielbar ist.

Ein Ausführungsbeispiel der Erfindung ist im folgenden mit weiteren Einzelheiten näher erläutert. Die schematische Zeichnung zeigt in
- Fig. 1: im Längsschnitt die Abgasturbine eines Abgasturboladers für eine Brennkraftmaschine in einem Kraftfahrzeug, mit einem integrierten Bypasskanal und Bypassventil;
- Fig. 2: einen Schnitt gemäß Linie II-II durch den Bypasskanal der Abgasturbine gemäß Fig. 1;
- Fig. 3: einen Querschitt durch eine weitere Abgasturbine gemäß Fig. 1 mit einem gekrümmt verlaufendem Bypasskanal; und
- Fig. 4: einen teilweisen Querschnitt eines weiteren Abgasturboladers gemäß Fig. 1 mit ebenfalls im wesentlichen geradlinig verlaufendem Bypasskanal.

Mit 10 ist eine Abgasturbine eines Abgasturboladers für eine Brennkraftmaschine in einem Kraftfahrzeug bezeichnet, deren fliegend gelagertes Turbinenrad 12 über eine Welle 14 einen nicht dargestellten Verdichter des Abgasturboladers antreibt.

Das Turbinenrad 12 ist in einem spiralförmig sich verengendem Turbineneinlauf 16 des Turbinengehäuses 18 angeordnet, wobei das über den Einströmflansch 20 radial einströmende Abgas in üblicher Weise in Umfangsrichtung umgelenkt und auf die Peripherie des Turbinenrades 12 verteilt wird.

Nach Durchströmen des Turbinenrades 12 tritt das Abgas zunächst axial aus dem Turbinenrad aus und wird in dem um ca. 90 ° gekrümmt verlaufenden Abströmkanal 22 umgelenkt, so daß es die Abgasturbine 10 über den Abströmflansch 24 etwa radial zum Turbinenrad 12 verläßt.

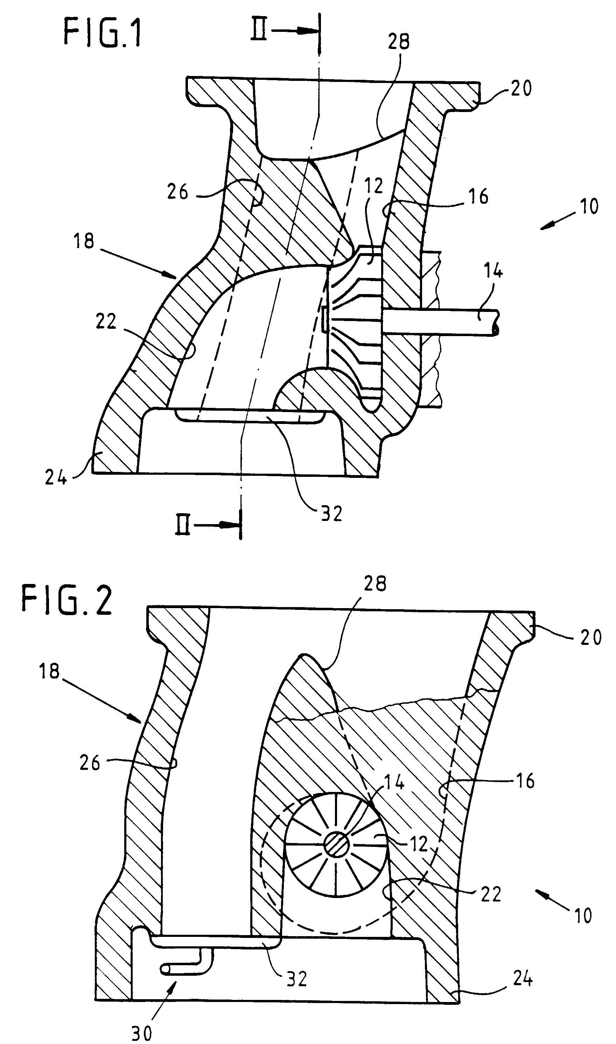

Innerhalb des Turbinengehäuses 18 ist ferner ein Bypasskanal 26 angeordnet, der vom Einströmflansch 20 zum Abströmflansch 24 verläuft und Abgas definierter Menge an dem Turbinenrad 12 vorbeiführt. Die Abzweigung des Bypasskanales 26 von dem Turbineneinlauf 16 erfolgt über eine strömungsgünstig geformte Trennwand 28 des Turbinengehäuses 18, die im Querschnitt gesehen (vgl. Fig. 2) etwa flügelförmig gestaltet ist.

Der parallel zur Ebene des Turbineneinlaufes 16 und etwa tangential zum Turbinenrad 12 und geradlinig verlaufende Bypasskanal 26 ist in bekannter Weise über ein Bypassventil 30 mit einer den Bypasskanal 26 verschließenden Klappe 32 gesteuert. Die Funktion des Bypassventiles 30 ist in üblicher Weise so, daß bei Erreichen des angestrebten Ladedruckes von z. B. 1 bar die Klappe 32 aufgesteuert wird, um überschüssiges Abgas an dem Turbinenrad 12 vorbei abzuleiten.

Wie die Fig. 1 und 2 zeigen, verläuft der Bypasskanal 26 (in der Fig. 1 gestrichelt dargestellt) im wesentlichen krümmungsfrei, so daß Einströmrichtung und Ausströmrichtung nahezu gleich sind. Daraus resultiert eine relativ verlustfreie Abführung des an dem Turbinenrad 12 vorbeigeführten Abgases.

Zur Erzielung günstiger Einbaumaße und Strömungsführungen liegen der Einströmflansch 20 und der Abströmflansch 24 parallel zueinander und nahezu unversetzt gegenüber, wodurch insbesondere die Baulänge des Abgasturboladers deutlich verminderbar ist. Ferner ist das Abgas auf kurzen Wegen über die Abgasturbine von der Brennkraftmaschine zur übrigen Abgasanlage ableitbar.

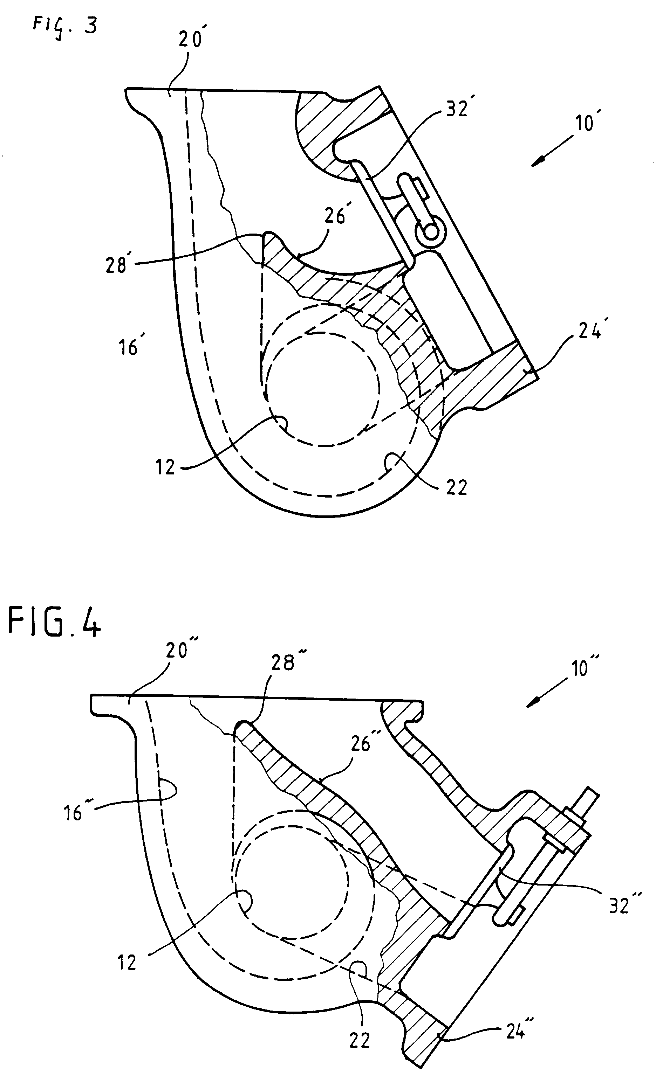

Die in den Fig. 3 und 4 gezeigten Abgasturbinen entsprechen soweit nicht beschrieben der in den Fig. 1 und 2 gezeigten Abgasturbine, insbesondere ist der Abströmkanal 22 abgesehen von einer räumlichen Verdrehung um die Drehachse des Turbinenrades 12 mit der beschriebenen ca. 90 ° Krümmung versehen. Funktionell gleiche Teile sind mit gleichen Bezugszeichen versehen.

In der Fig. 3 liegt der Abströmflansch 24' der Abgasturbine 10' nicht wie vorbeschrieben dem Einströmflansch 20' gegenüber, sondem umfangsmäßig mit Bezug zum Turbinenrad 12 versetzt. Dementstprechend ist der nur sehr kurz ausgeführte Bypasskanal 26' gekrümmt ausgeführt, wobei ein Teilabschnitt des Kanalverlaufes - wie ohne weiteres ersichtlich ist - tangential zum Turbinenrad 12 verläuft und dann im wesentlichen in radialer Ausrichtung in den Abströmflansch 24' mündet.

Die Fig. 4 zeigt ein weiteres Ausführungsbeispiel einer Abgasturbine 10", bei der der Bypasskanal 26" wiederum im wesentlichen geradlinig vom Turbineneinlauf 16" bzw. Einströmflansch 20" tangential zum Turbinenrad 12 zum Abströmflansch 24" verläuft und dabei im wesentlichen radial zum Turbinenrad 12 ausmündet. In der Zeichnungsebene versetzt dazu verläuft der Abströmkanal 22, der axial aus dem Turbinenrad 12 austretend mit einer im wesentlichen 90 ° Krümmung radial in den Abströmflansch 24" ausmündet.

## Patentansprüche

1. Abgasturbolader für Brennkraftmaschinen, insbesondere in Kraftfahrzeugen, mit einem Turbinengehäuse mit einem im wesentlichen radial zum Turbinenrad verlaufenden Turbineneinlauf und einem axial von der Turbine abgehenden Abströmkanal mit einem Abströmflansch, wobei der Abströmkanal innerhalb des Turbinengehäuses zur Erzielung einer im wesentlichen radialen Abströmung des Abgases gekrümmt ist, und mit einem die Turbine umgehenden, über ein Bypassventil gesteuerten Bypass, dadurch gekennzeichnet, daß der in das Turbinengehäuse (10) integrierte Bypasskanal (26) ebenfalls mit radialer Ausrichtung in den an den Abströmkanal (22) anschließenden Abströmflansch (24) ausmündet.

2. Abgasturbolader nach den Anspruch 1, dadurch gekennzeichnet, daß der Bypasskanal (26) vom Turbineneinlauf (16) zum Abströmflansch (24) zumindest abschnittsweise tangential zum Turbinenrad (12) verläuft.

3. Abgasturbolader nach den Ansprüchen 1 und 2, dadurch gekennzeichnet, daß der Bypasskanal (26) im wesentlichen geradlinig vom Einströmflansch (20) zum Abströmflansch (24) verläuft.

4. Abgasturbolader nach einem oder mehreren der Ansprüche 1 - 3, dadurch gekennzeichnet, daß der Einströmflansch (20) und der Abströmflansch (24) des Turbinengehäuses (10) in Umfangsrichtung des Turbinenrades (12) versetzt zueinander angeordnet sind.

5. Abgasturbolader nach Anspruch 4, dadurch gekennzeichnet, daß der Einström- und der Abströmflansch einander gegenüberliegend angeordnet sind.

6. Abgasturbolader nach einem oder mehreren der vorhergehenden Ansprüche, dadurch gekennzeichnet, daß die Aufteilung zwischen Bypasskanal (26) und Turbineneinlauf (16) durch eine strömungsdynamisch ausgebildete Trennwand (28) des Turbinengehäuses (18) ausgeführt ist.

## Claims

1. Exhaust gas turbo super-charger for internal combustion engines, especially in motor vehicles, with a turbine housing with a turbine inlet extending substantially radially with respect to the turbine wheel, and an outflow duct coming off axially from the turbine with an outflow flange, the outflow duct being curved interiorly of the turbine housing to achieve a substantially radial outflow of the exhaust gas, and with a bypass that avoids the turbine and is controlled by a bypass valve, characterised in that the bypass duct (26) which is integrated in the turbine housing (10) also opens out with radial orientation into the outflow flange (24) which adjoins the outflow duct (22).

2. Exhaust gas turbo super-charger according to claim 1, characterised in that the bypass duct (26) extends from the turbine inlet (16) to the outflow flange (24) tangentially at least in part with respect to the turbine wheel (12).

3. Exhaust gas turbo super-charger according to claims 1 and 2, characterised in that the bypass duct (26) extends substantially rectilinearly from the inflow flange (20) to the outflow flange (24).

4. Exhaust gas turbo super-charger according to one or more of claims 1 - 3, characterised in that the inflow flange (20) and the outflow flange (24) of the turbine housing (10) are arranged offset with respect to each other in the peripheral direction of the turbine wheel (12).

5. Exhaust gas turbo super-charger according to claim 4, characterised in that the inflow flange and the outflow flange are arranged disposed opposite to each other.

6. Exhaust gas turbo super-charger according to one or more of the preceding claims, characterised in that the division between the bypass duct (26) and the turbine inlet (16) is effected by an aerodynamically constructed partition (28) of the turbine housing (18).

## Revendications

1. Turbocompresseur à gaz d'échappement pour des moteurs à combustion interne, en particulier dans des véhicules automobiles, comprenant un carter de turbine qui comporte une entrée de turbine s'étendant en direction sensiblement radiale par rapport au rotor de la turbine et un conduit de sortie partant en direction axiale de la turbine et muni d'une bride de sortie, le conduit de sortie étant incurvé à l'intérieur du carter de turbine en vue de l'obtention d'un écoulement de sortie sensiblement radial des gaz d'échappement, ainsi qu'une dérivation contournant la turbine et commandée au moyen d'une valve de dérivation, caractérisé en ce que le conduit de dérivation (26), intégré dans le carter de turbine (10), débouche également suivant une orientation radiale dans la bride de sortie (24) qui se rattache au conduit de sortie (22).

2. Turbocompresseur à gaz d'échappement selon la revendication 1, caractérisé en ce que le conduit de dérivation (26) s'étend de l'entrée de turbine (16) jusqu'à la bride de sortie (24), en étant tangentiel, au moins sur un tronçon, au rotor de turbine (12).

3. Turbocompresseur à gaz d'échappement selon les revendications 1 et 2, caractérisé en ce que le conduit de dérivation (26) s'étend de façon sensiblement rectiligne, de la bride d'entrée (20) jusqu'à la bride de sortie (24).

4. Turbocompresseur à gaz d'échappement selon une ou plusieurs des revendications 1 à 3, caractérisé en ce que la bride d'entrée (20) et la bride de sortie (24) du carter de turbine (10) sont mutuellement décalées dans le sens circonférentiel du rotor de turbine (12).

5. Turbocompresseur à gaz d'échappement selon la revendication 4, caractérisé en ce que la bride d'entrée et la bride de sortie sont disposées à l'opposé l'une de l'autre.

6. Turbocompresseur à gaz d'échappement selon une ou plusieurs des revendications précédentes, caractérisé en ce que la séparation entre le conduit de dérivation (26) et l'entrée de turbine (16) est réalisée au moyen d'une paroi de séparation (28), ayant une configuration favorisant un écoulement dynamique, du carter de turbine (18).
